(19) Europäisches Patentamt
European Patent Office
Office européen des brevets

(11) Veröffentlichungsnummer: **0 433 764 A1**

(12) # EUROPÄISCHE PATENTANMELDUNG

(21) Anmeldenummer: **90123288.4**

(51) Int. Cl.5: **C09B 62/04**, C09B 62/78

(22) Anmeldetag: **05.12.90**

(30) Priorität: **15.12.89 DE 3941395**

(43) Veröffentlichungstag der Anmeldung: **26.06.91 Patentblatt 91/26**

(84) Benannte Vertragsstaaten: **CH DE FR GB IT LI**

(71) Anmelder: **BASF Aktiengesellschaft**
**Carl-Bosch-Strasse 38**
**W-6700 Ludwigshafen(DE)**

(72) Erfinder: **Siegel, Bernd, Dr.**
**Faberstrasse 39**
**W-6700 Ludwigshafen(DE)**
Erfinder: **Pandl, Klaus, Dr.**
**Schumannstrasse 18**
**W-6700 Ludwigshafen(DE)**
Erfinder: **Marschner, Claus, Dr.**
**Franz-Boegler-Weg 3**
**W-6720 Speyer(DE)**
Erfinder: **Patsch, Manfred, Dr.**
**Fritz-Wendel-Strasse 4**
**W-6706 Wachenheim(DE)**

(54) **Reaktivfarbstoffe mit Triazin- und Chlorbutinylanker.**

(57) Reaktivfarbstoffe der Formel

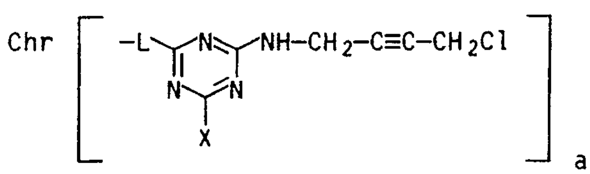

in der

a 1 oder 2,

X Fluor, Chlor, Brom, $C_1$-$C_4$-Alkylsulfonyl, Phenylsulfonyl oder einen Rest der Formel

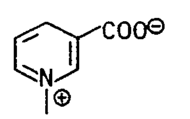 ,

L Imino, $C_1$-$C_4$-Alkylimino oder Phenylimino und

Chr den Rest eines Chromophors, der gegebenenfalls eine weitere reaktive Gruppe aufweist und der sich von einem gegebenenfalls metallisierten Mono- oder Disazofarbstoff, einem Triphendioxazin, einem Anthrachinon, einem Kupfer-Formazan oder einem metallisierten Phthalocyanin ableitet, bedeuten,

sowie ihre Verwendung zum Färben oder Bedrucken von Hydroxygruppen oder Stickstoff enthaltenden Substraten.

EP 0 433 764 A1

## REAKTIVFARBSTOFFE MIT TRIAZIN- UND CHLORBUTINYLANKER

Die vorliegende Erfindung betrifft neue Reaktivfarbstoffe der Formel I

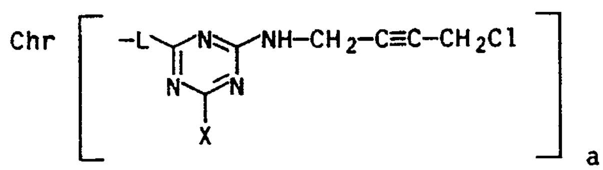

(I),

in der

a 1 oder 2,

X Fluor, Chlor, Brom, $C_1$-$C_4$-Alkylsulfonyl, Phenylsulfonyl oder einen Rest der Formel

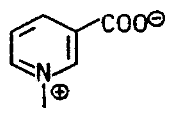

,

L Imino, $C_1$-$C_4$-Alkylimino oder Phenylimino und

Chr den Rest eines Chromophors, der gegebenenfalls eine weitere reaktive Gruppe aufweist und der sich von einem gegebenenfalls metallisierten Mono- oder Disazofarbstoff, einem Triphendioxazin, einem Anthrachinon, einem Kupfer-Formazan oder einem metallisierten Phthalocyanin ableitet, bedeuten.

Aus der BE-A-596 061 sind Doppelankerreaktivfarbstoffe bekannt, deren Chromophor ein Kupferphthalocyaninderivat darstellt und die als reaktive Gruppen den Chlortriazinylrest und den 4-Chlorbut-2-en-1-ylrest aufweisen, wobei die beiden reaktiven Reste durch ein Brückenglied auf Basis von 4-Aminobenzolsulfonamid miteinander verbunden sind.

Weiterhin sind in der DE-B-1 130 097 und der DE-B-1 208 020 Reaktivfarbstoffe auf Basis von Kupferphthalocyanin beschrieben, deren Reaktivanker der 4-Chlorbut-2-in-1-ylrest ist.

Es hat sich jedoch gezeigt, daß diese Farbstoffe anwendungstechnische Mängel aufweisen.

Aufgabe der vorliegenden Erfindung war es nun, neue Reaktivfarbstoffe bereitzustellen, deren Doppelankerrest der Triazin-/4-Chlor-but-2-in-1-ylrest sein sollte.

Demgemäß wurden die eingangs näher bezeichneten Reaktivfarbstoffe der Formel I gefunden.

Alle in den erfindungsgemäßen Reaktivfarbstoffen auftretenden Alkylgruppen können sowohl geradkettig als auch verzweigt sein.

Wenn in den erfindungsgemäßen Reaktivfarbstoffen substituierte Phenylreste auftreten, können, sofern nicht anders vermerkt, als Substituenten z.B. $C_1$-$C_4$-Alkyl, $C_1$-$C_4$-Alkoxy oder Halogen in Betracht kommen.

Reste L sind z.B. Methylimino, Ethylimino, Propylimino, Isopropylimino, Butylimino, Isobutylimino oder sec-Butylimino.

Reste X sind z.B. Methylsulfonyl, Ethylsulfonyl, Propylsulfonyl, Isopropylsulfonyl oder Butylsulfonyl.

Der faserreaktive Doppelankerrest der Formel II

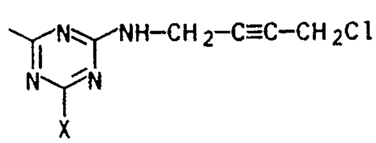

(II),

in der X die obengenannte Bedeutung besitzt, wird im folgenden als "E" bezeichnet.

Neben dem Doppelankersystem E kann der Rest Chr noch weitere faserreaktive Reste tragen. Solche Reste leiten sich z.B. von Triazin-, Pyrimidin- oder Vinylsulfonylverbindungen oder Vorstufen von Vinylsulfonylverbindungen ab.

Wenn der Rest Chr noch weitere faserreaktive Reste trägt, sind solche Reaktivfarbstoffe bevorzugt, die

über einen zusätzlichen reaktiven Rest der Formel $-SO_2-Y$ verfügen, wobei Y Vinyl oder den Rest $C_2H_4-Z$ bedeuten. Z steht dabei für eine unter alkalischen Reaktionsbedingungen abspaltbare Gruppe. Solche Gruppen sind z.B. Chlor, $OSO_3H$, $SSO_3H$, $Op(O)(OH)_2$, $C_1$-$C_4$-Alkylsulfonyloxy, gegebenenfalls substituiertes Phenylsulfonyloxy, $C_1$-$C_4$-Alkanoyloxy, $C_1$-$C_4$-Dialkylamino,

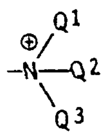 An⊖, 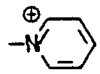 An⊖, 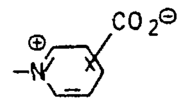 oder 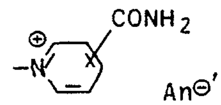 An⊖'

wobei $Q^1$, $Q^2$ und $Q^3$ gleich oder verschieden sind und unabhängig voneinander jeweils die Bedeutung von $C_1$-$C_4$-Alkyl oder Benzyl und $An^{\ominus}$ jeweils die Bedeutung eines Anions besitzen. Geeignete Anionen sind z.B. Fluorid, Chlorid, Bromid, Iodid, Mono-, Di- oder Trichloracetat, Methylsulfonat, Phenylsulfonat oder 2- oder 4-Methylphenylsulfonat.

Bevorzugt sind Reaktivfarbstoffe der Formel Ia

$$Chr(-L^1-E^1)_a \qquad (Ia),$$

in der
Chr und a jeweils die obengenannte Bedeutung besitzen, $L^1$ Imino und $E^1$ einen Rest der Formel IIa

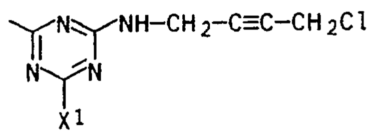 (IIa),

in der $X^1$ für Fluor oder Chlor steht, bedeuten.

Chr in Formel I stellt z.B. den gegebenenfalls metallisierten Rest eines Azofarbstoffs dar. Geeignete Azofarbstoffe von denen sich solche Reste ableiten, sind an sich bekannt und in großer Zahl beschrieben, z. B. in K. Venkataraman "The Chemistry of Synthetic Dyes", Vol. VI, Academic Press, New York, London, 1972. Die Azofarbstoffe gehorchen der Formel III

$$D-N = N-K\ (-N=N-D)_l \qquad (III),$$

in der D den Rest einer Diazokomponente, K den Rest einer Kupplungskomponente und l O oder 1 bedeuten.

Wertvolle Farbstoffe, von denen sich der Rest Chr ableitet, sind z.B. wasserlösliche Azofarbstoffe, insbesondere Monoazofarbstoffe, der Formel III (l = 0), die Hydroxysulfonyl- und/oder Carboxylgruppen aufweisen können.

Bevorzugt leitet sich der Rest Chr ab von nichtmetallisierten Azofarbstoffen, insbesondere von solchen, die Sulfonsäuregruppen enthalten, wobei jene, die 1 bis 4 Sulfonsäuregruppen aufweisen, besonders hervorzuheben sind.

Wichtige Azofarbstoffe, von denen sich der Rest Chr ableitet, sind beispielsweise solche der Phenyl-azo-naphthalin-, Phenyl-azo-1-phenylpyrazol-5-on-, Phenyl-azo-benzol-, Naphthyl-azo-benzol-, Phenyl-azo-aminonaphthalin-, Naphthyl-azo-naphthalin-, Naphthyl-azo-1-phenylpyrazol-5-on-, Phenyl-azo-pyridon, Phenyl-azo-aminopyridin, Naphthalyl-azo-pyridon- oder Naphthalyl-azo-aminopyridinreihe.

Besonders bevorzugt sind Reaktivfarbstoffe der Formel IV

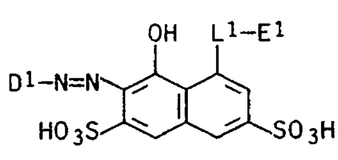 (IV),

in der $L^1$ und $E^1$ jeweils die obengenannte Bedeutung besitzen und $D^1$ den Rest einer Diazokomponente der Anilin- oder Aminonaphthalinreihe, die gegebenenfalls eine weitere faserreaktive Gruppe aufweist, bedeutet.

Weiterhin besonders bevorzugt sind Reaktivfarbstoffe der Formel V

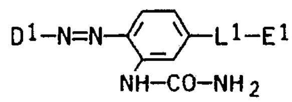

(V),

in der $D^1$, $E^1$ und $L^1$ jeweils die obengenannte Bedeutung besitzen.

Weiterhin besonders bevorzugt sind Reaktivfarbstoffe der Formel VI

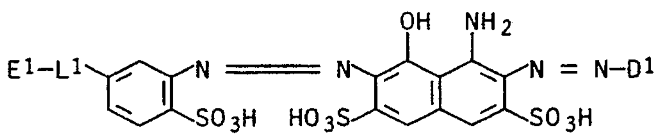

(VI),

in der $D^1$, $E^1$ und $L^1$ jeweils die obengenannte Bedeutung besitzen.

Aromatischen Reste $D^1$ der Diazokomponenten der Anilin- und Aminonaphthalinreihe leiten sich beispielsweise von Aminen der Formel VIIa oder VIIb

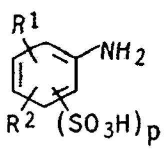

(VIIa)

,

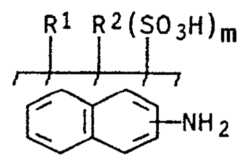

(VIIb)

ab, wobei

- m 0, 1, 2 oder 3,
- p 0, 1 oder 2,
- $R^1$ Wasserstoff, Methyl, Ethyl, Methoxy, Ethoxy, Acetyl, Cyano, Carboxyl, Hydroxysulfonyl, $C_1$-$C_4$-Alkoxycarbonyl, Hydroxy, Carbamoyl, $C_1$-$C_4$-Mono-oder Dialkylcarbamoyl, Fluor, Chlor, Brom oder Trifluormethyl und
- $R^2$ Wasserstoff, Methyl, Ethyl, Methoxy, Ethoxy, Cyano, Carboxyl, Hydroxysulfonyl, Acetylamino, $C_1$-$C_4$-Alkoxycarbonyl, Carbamoyl, $C_1$-$C_4$-Mono- oder Dialkylcarbamoyl, Fluor, Chlor, Nitro, Sulfamoyl, $C_1$-$C_4$-Mono- oder Dialkylsulfamoyl, $C_1$-$C_4$-Alkylsulfonyl, Phenylsulfonyl, Phenoxy oder den Rest $SO_2$-Y, worin Y die obengenannte Bedeutung besitzt, bedeuten.

Bevorzugt sind solche Komponenten, in denen $R^1$ Wasserstoff, Methyl, Methoxy, Hydroxysulfonyl, Hydroxy oder Chlor und $R^2$ Wasserstoff, Methyl, Methoxy, Hydroxysulfonyl oder Chlor bedeuten.

Aromatische Amine die sich als Diazokomponenten eignen und die der Formel VIIa oder VIIb entsprechen, sind beispielsweise Anilin, 2-Methoxyanilin, 2-Methylanilin, 4-Chlor-2-aminoanisol, 4-Methylanilin, 4-Methoxyanilin, 2-Methoxy-5-methylanilin, 2,5-Dimethoxyanilin, 2,5-Dimethylanilin, 2,4-Dimethylanilin, 2,5-Diethoxyanilin, 2-Chloranilin, 3-Chloranilin, 4-Chloranilin, 2,5-Dichloranilin, 4-Chlor-2-nitroanilin, 4-Chlor-2-methylanilin, 3-Chlor-2-methylanilin, 4-Chlor-2-aminotoluol, 4-Phenylsulfonylanilin, 4-Methylsulfonylanilin, 2,4-Dichloranilin-5-carbonsäure, 2-Aminobenzoesäure, 4-Aminobenzoesäure, 3-Aminobenzoesäure, 3-Chloranilin-6-carbonsäure, Anilin-2- oder -3- oder -4-sulfonsäure, Anilin-2,5-disulfonsäure, Anilin-2,4-disulfonsäure, Anilin-3,5-disulfonsäure, 2-Aminotoluol-4-sulfonsäure, 2-Aminoanisol-4-sulfonsäure, 2-Aminoanisol-5-sulfonsäure, 2-Ethoxyanilin-5-sulfonsäure, 2-Ethoxyanilin-4-sulfonsäure, 4-Hydroxysulfonyl-2-aminobenzoesäure, 2,5-Dimethoxyanilin-4-sulfonsäure, 2,4-Dimethoxyanilin-5-sulfonsäure, 2-Methoxy-5-methylanilin-4-sulfonsäure, 4-Aminoanisol-3-sulfonsäure, 4-Aminotoluol-3-sulfonsäure, 2-Aminotoluol-5-sulfonsäure, 2-Chloranilin-4-sulfonsäure, 2-Chloranilin-5-sulfonsäure, 2-Bromanilin-4-sulfonsäure, 2,6-Dichloranilin-4-sulfonsäure, 2,6-Dimethylanilin-3-, oder -4-sulfonsäure, 3-Acetylamino-6-sulfonsäure, 4-Acetyl-amino-2-hydroxysulfonylanilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Napththylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonapthalin-3,6-disulfonsäure, 2-Aminonaphthalin-4,8-disulfonsäure, 2-Aminophenol-4-sulfonsäure, 2-Aminophenol-5-sulfonsäure, 3-Aminophenol-6-sulfonsäure, 2-Ethoxy-1-naphthylamin-6-sulfonsäure, 5- oder 6-(2-Sulfatoethylsulfonyl)2-aminonaphthalin-1-sulfonsäure, 5- oder 6-Vinylsulfonyl-2-aminonaphthalin-1-sulfonsäure, 3- oder 4-(2-Sulfatoethylsulfonyl)anilin, 3-(2-Chlorethylsulfonyl)anilin, 3- oder 4-Vinylsulfonylanilin, 5- oder 6-(2-Sulfatoethylsulfonyl)-2-aminonaphthalin, 5- oder 6-Vinylsulfonyl-2-aminonaphthalin, 5-(2-Sulfatoethylsulfonyl)-2-aminonaphthalin-1,7-disulfonsäure oder 5-Vinylsulfonyl-2-aminonapht halin-1,7-disulfonsäure.

Anstelle der Azofarbstoffreste können die Farbstoffe der Formel I auch entsprechende Metallkomplexfarbstoffreste enthalten. Als komplexierende Metalle kommen dabei insbesondere Kupfer, Kobalt, Chrom, Nickel oder Eisen in Betracht, wobei Kupfer; Kobalt oder Chrom bevorzugt sind.

Dabei befinden sich die metallisierten Gruppen vorzugsweise jeweils in ortho-Stellung zur Azogruppe, z. B. in Form von o,o'-Dihydroxy-, o-Hydroxy-o'-carboxy-, o-Carboxy-o'-amino oder o-Hydroxy-o'-aminoazogruppierungen.

Chr in Formel I stellt weiterhin z.B. den Rest eines Kupfer-Formazanfarbstoffs dar. Kupfer-Formazane sind an sich bekannt und beispielsweise in K. Venkataraman "The Chemistry of Synthetic Dyes", vol. III, Academic Press, New York, London, 1970, beschrieben.

Besonders bevorzugt sind Kupfer-Formazanfarbstoffe der Formel VIII

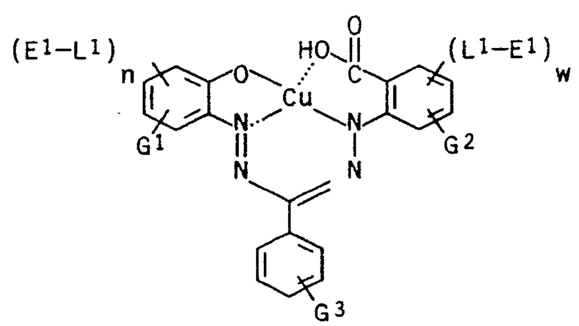

(VIII),

in der

| | |
|---|---|
| $G^1$, $G^2$ und $G^3$ | gleich oder verschieden sind und unabhängig voneinander jeweils Wasserstoff oder Hydroxysulfonyl, |
| n | 0 oder 1 und |
| w | 0 oder 1 bedeuten und |
| $E^1$ | und $L^1$ jeweils die obengenannte Bedeutung besitzen, mit der Maßgabe, daß n und w nicht gleichzeitig 0 bedeuten. |

Eine Methode zur Herstellung der diesen Farbstoffen zugrundeliegenden Formazane ist beispielsweise in der EP-A-315 046 beschrieben.

Chr in Formel I stellt weiterhin z.B. den Rest eines Anthrachinonfarbstoffs dar. Anthrachinone sind an sich bekannt und beispielsweise in K. Venkataraman "The Chemistry of Synthetic Dyes", Vol. II, Academic Press, New York, 1952, beschrieben.

Besonders bevorzugt sind Anthrachinonfarbstoffe der Formel IX

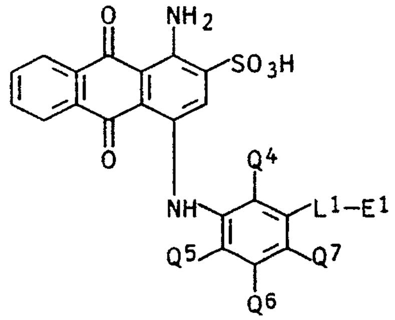

(IX),

in der $E^1$ und $L^1$ jeweils die obengenannte Bedeutung besitzen, $Q^4$ und $Q^5$ gleich oder verschieden sind und unabhängig voneinander jeweils Wasserstoff oder Methyl bedeuten und einer der beiden Reste $Q^6$ und $Q^7$ für Wasserstoff oder Methyl und der andere für Hydroxysulfonyl steht.

Chr in Formel I stellt weiterhin z.B. den Rest eines Triphendioxazinfarbstoffs dar. Triphendioxazine sind an sich bekannt und beispielsweise in der EP-A-141 359 oder EP-A-311 969 beschrieben.

Besonders bevorzugt sind Triphendioxazinfarbstoffe der Formel X

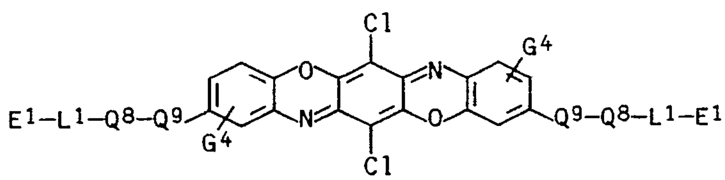

(X),

in der

| | |
|---|---|
| $E^1$ und $L^1$ | jeweils die obengenannte Bedeutung besitzen und |
| $G^4$ | für Hydroxysulfonyl oder den Rest $SO_2$-$C_2H_4$-$OSO_3H$, |
| $Q^9$ | für Sauerstoff, Imino oder $C_1$-$C_4$-Alkylimino und |
| $Q^8$ | für geradkettiges oder verzweigtes $C_2$-$C_4$-Alkylen oder Phenylen stehen. |

Chr in Formel I stellt weiterhin z.B. den Rest eines metallisierten Phthalocyaninfarbstoffs dar. Phthalocyanine sind an sich bekannt und beispielsweise in F.H. Moser, D.L. Thomas "The Phthalocyanines", Vol. II, CRC Press, Boca Raton, Florida, 1983, beschrieben.

Besonders bevorzugt sind Phthalocyaninfarbstoffe der Formel XI

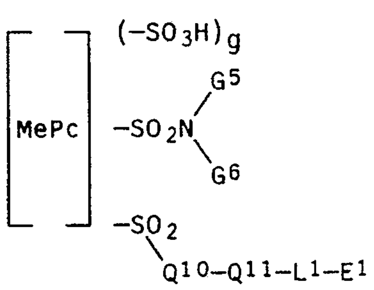

(XI),

in der

| | |
|---|---|
| $G^5$ und $G^6$ | gleich oder verschieden sind und unabhängig voneinander jeweils Wasserstoff oder $C_1$-$C_4$-Alkyl, |
| $Q^{10}$ | Imino oder $C_1$-$C_4$-Alkylimino, |
| $Q^{11}$ | geradkettiges oder verzweigtes $C_2$-$C_4$-Alkylen oder Phenylen, |
| Me | Kupfer oder Nickel und |
| g | 0, 1, 2 oder 3 bedeuten und $L^1$ und $E^1$ jeweils die obengenannte Bedeutung besitzen. |

Die Herstellung der erfindungsgemäßen Reaktivfarbstoffe der Formel I erfolgt z.B. dadurch, daß man einen Farbstoff der Formel XII

$$\text{Chr-L-H} \qquad \text{(XII)},$$

in der Chr und L jeweils die obengenannte Bedeutung besitzen, zunächst mit einem Triazinderivat der Formel XIII

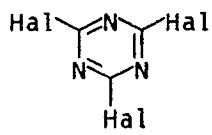

(XIII),

in der Hal Fluor, Chlor oder Brom bedeutet, und anschließend mit 4-Chlorbut-2-in-1-yl-amin umsetzt.

Bei der Herstellung der entsprechenden Azofarbstoffe ist es auch möglich, entweder die Diazokomponente oder die Kupplungskomponente zunächst mit dem Triazinderivat XIII und danach mit 4-Chlorbut-2-in-1-ylamin umzusetzen und danach in bekannter Weise die Azokupplung durchzuführen.

Die neuen Reaktivfarbstoffe der Formel I eignen sich in vorteilhafter Weise zum Färben oder Bedrucken von Hydroxylgruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Wolle oder insbesondere von Baumwolle.

Die folgenden Beispiele sollen die Erfindung näher erläutern. Die angegebenen Formeln sind die der freien Säuren. Bei der Herstellung fallen die Farbstoffe in der Regel in Form ihrer Salze an, insbesondere in Form der Alkalisalze, wie Lithium-, Natrium- oder Kaliumsalze.

Beispiel 1

a) 31,9 g (0,1 mol) 1-Amino-8-hydroxynapthalin-3,6-disulfonsäure wurden in 150 g Wasser neutral gelöst und auf 0 bis 5 °C abgekühlt. Bei dieser Temperatur wurde eine Suspension aus 18,2 g (0,1 mol) 2, 4, 6-Trichlor-1,3,5-triazin und 200 g Eis eingetragen und bis zur vollständigen Umsetzung gerührt. Anschließend wurde das Reaktiongemisch mit 14 g (0,1 mol) 1-Amino-4-chlorbut-2-in-hydrochlorid versetzt, der pH-Wert mittels 2n Natriumbicarbonatlösung auf 5,5 bis 6 gestellt und die Temperatur innerhalb von 2 bis 3 Stunden auf 20 bis 25 °C erhöht.

b) Nach beendeter Umsetzung wurde das Reaktionsgemisch auf 0 bis 10 °C abgekühlt und mit 30,4 g diazotierter 2-Aminonaphthalin-1,5-disulfonsäure bei einem pH-Wert von 6 bis 6,5 gekuppelt. Nach beendeter Kupplung wurde der Farbstoff isoliert, was durch Aussalzen, Eindampfen oder Gefriertrocknen der Lösung möglich ist.

Der Farbstoff färbt Baumwolle in rotem Ton und entspricht der Formel

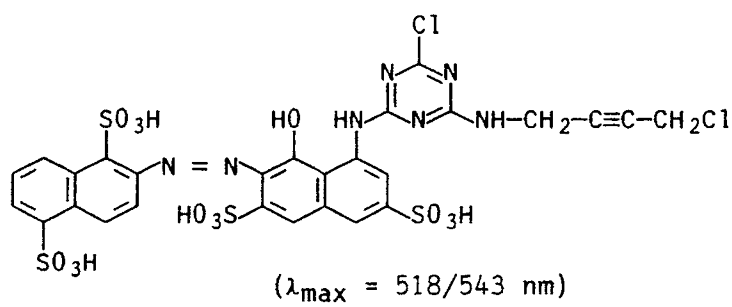

($\lambda_{max}$ = 518/543 nm)

Beispiel 2

31,9 g 1-Amino-8-hydroxynaphthalin-3,6-disulfonsäure wurden in 800 ml Wasser neutral gelöst und die Lösung auf 0 bis 5 °C abgekühlt. Bei dieser Temperatur wurden 14,2 g 2,4,6-Trifluor-1,3,5-triazin zugetropft, wobei das Reaktionsgemisch durch Zudosieren von 2 n Natronlauge bei einem pH-Wert von 3 gehalten wurde. Nach vollständiger Umsetzung wurden der Reaktionslösung 14 g (0,1 mol) 1-Amino-4-chlorbut-2-in-hydrochlorid zugegeben, der pH-Wert mittels 2n Natriumhydroxid-Lösung auf 5,5 bis 6 gestellt und die Temperatur innerhalb von 2 bis 3 Stunden auf 20 bis 25 °C erhöht. Nach beendeter Reaktion wurde die Kupplungskomponente auf 0 bis 10 °C abgekühlt und mit 30,3 g diazotierter 2-Aminonaphthalin-1,5-disulfonsäure bei einem pH-Wert von 6 bis 6,5 versetzt. Nach vollständiger Kupplungsreaktion wurde das Reaktionsgemisch klärfiltriert und der Reaktivfarbstoff aus der Lösung isoliert, was durch Aussalzen,

Eindampfen oder Gefriertrocknen möglich ist. Man erhielt einen Farbstoff der Formel

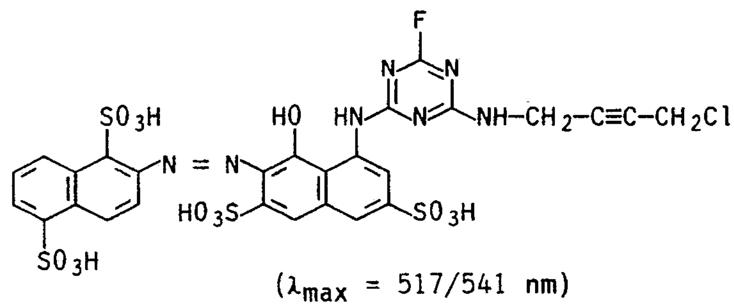

($\lambda_{max}$ = 517/541 nm)

Er färbt Baumwolle in rotem Ton.

Beispiel 3

Zu der in Beispiel 1a dargestellten Kupplungskomponente wurde eine Diazoniumsalz-Suspension, die aus 28,1 g 4-(ß-Sulfatoethylsulfonyl)anilin in üblicher Weise hergestellt wurde, bei 0 bis 5° C zugegeben. Man ließ das Reaktionsgemisch allmählich Raumtemperatur (20 bis 25° C) annehmen und hielt dabei den pH-Wert der Lösung zwischen 5 bis 6. Nach beendeter Umsetzung wurde klärfiltriert und der entstandene Farbstoff isoliert, was durch Aussalzen, Eindampfen oder Gefriertrocknen der Lösung möglich ist. Man erhielt einen Farbstoff der Formel

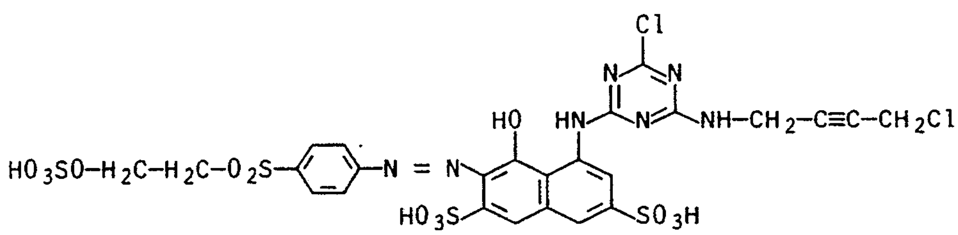

,

($\lambda_{max}$ = 518 nm)

der Baumwolle in rotem Ton färbt.

Beispiel 4

Zu dem in Beispiel 1a dargestellten Kondensationsprodukt aus 1-Amino-8-hydroxynaphthalin-3,6-disulfonsäure, Cyanurchlorid und 1-Amino-4-chlorbut-2-in-hydrochlorid wurde bei 0 bis 5° C eine Diazoniumsalz-Suspension, die aus 41,1 g 5-(ß-Sulfatoethylsulfonyl)-2-aminonaphthalin-1-sulfonsäure auf die übliche Weise hergestellt wurde, zugegeben. Die Kupplungsreaktion wurde bei einem pH-Wert von 6 bis 6,5 durchgeführt, wobei man das Reaktionsgemisch allmählich auf Raumtemperatur (20 bis 25° C) erwärmte. Nach beendeter Umsetzung wurde klärfiltriert und der entstandene Reaktivfarbstoff isoliert, was durch Aussalzen, Eindampfen oder Gefriertrocknen der Lösung möglich ist. Man erhielt einen Farbstoff der Formel

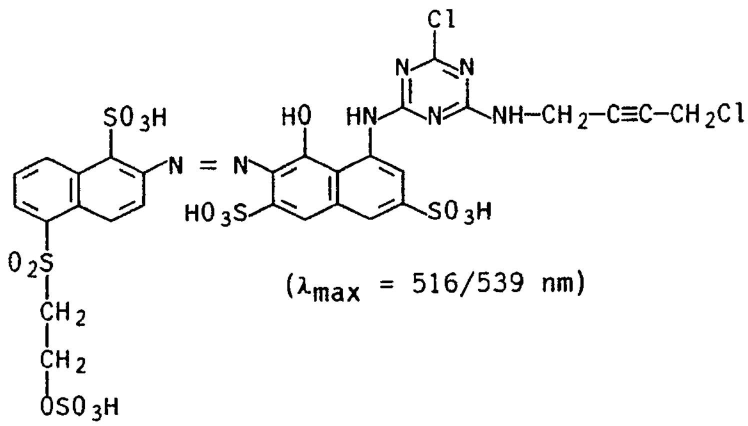

(λmax = 516/539 nm)

,

der Baumwolle in rotem Ton färbt.

In analoger Weise werden die in der folgenden Tabelle 1 aufgeführten Farbstoffe der Formel

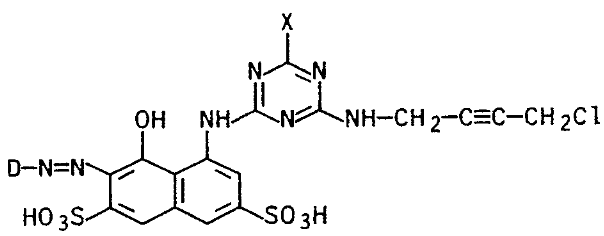

(X = Fluor oder Chlor)

erhalten.

Tabelle 1

| Bsp. Nr. | D | λmax [nm] | Farbton auf Baumwolle |
|---|---|---|---|
| 5 | 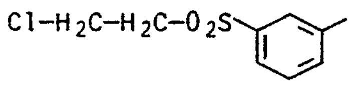 | 513 | blaustichig rot |
| 6 | 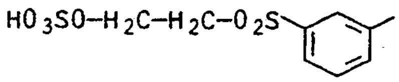 | 510 | blaustichig rot |
| 7 | 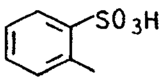 | 513/534 | blaustichig rot |
| 8 | 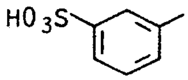 | 514/531 | blaustichig rot |
| 9 | 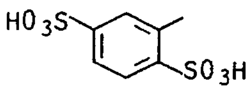 | 513/527 | gelbstichig rot |
| 10 | 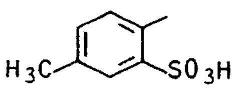 | 520/543 | blaustichig rot |
| 11 | 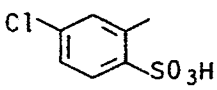 | 514/526 | blaustichig rot |
| 12 | 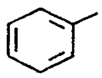 | 518/544 | blaustichig rot |
| 13 | 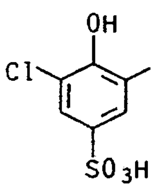 | 524 | blaustichig rot |
| 14 | 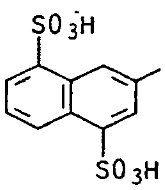 | 526/549 | bordo |
| 15 | 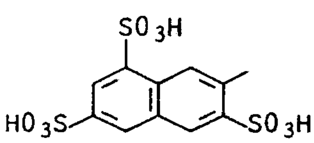 | 530 | bordo |

Beispiel 16

27,3 g (0,05 mol) des Azofarbstoffes der Formel

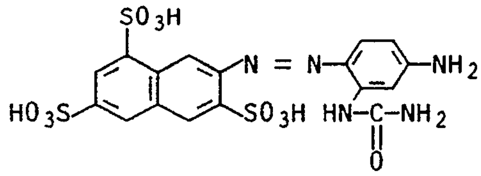

,

die in 150 ml Wasser neutral gelöst wurden, wurden zu einer Suspension aus 9,2 g (0,05 mol) 2,4,6-Trichlor-1,3,5-triazin, 100 g Eis und 5 ml konz. Salzsäure gegeben, wobei man das Reaktionsgemisch langsaum auf Raumtemperatur erwärmen ließ und den pH-Wert mit 2n Natronlauge bei 5 bis 6 hielt. Nach beendeter Umsetzung wurde das Reaktionsgemisch mit 7 g (0,05 mol) 1-Amino-4-chlorbut-2-in-hydrochlorid, gelöst in 50 ml Wasser, versetzt, auf 30 °C erwärmt und bis zur vollständigen Kondensation ein pH-Wert von 6,5 mit 2n Natronlauge eingestellt. Der Farbstoff der Formel wurde

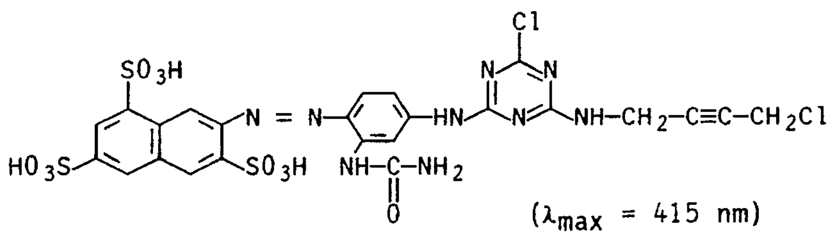

($\lambda_{max}$ = 415 nm)

isoliert, was durch Aussalzen, Eindampfen oder Gefriertrocknen der Reaktionslösung möglich ist. Er färbt Baumwolle in gelbem Ton.

Beispiel 17

Zu 27,3 g (0,05 mol) des in Beispiel 16 verwendeten Azofarbstoffs, der in 150 ml Wasser neutral gelöst und mit 100 g Eis versetzt wurde, wurden 8,1 g (0,06 mol) 2,4,6-Trifluor-1,3,5-triazin bei 0 bis 3 °C eingetropft, wobei der pH-Wert mit 2 n Natriumhydrogencarbonat-Lösung bei 6 bis 6,5 gehalten wurde. Nach beendeter Umsetzung wurden dem Reaktionsgemisch 7 g (0,05 mol) 1-Amino-4-chlorbut-2-in-hydrochlorid, gelöst in 50 ml Wasser, zugegeben und der pH-Wert mittels 2n Natronlauge bei 6,5 gehalten. Zur Beendigung der Kondensationsreaktion wurde das Rekationsgemisch allmählich auf 20 bis 25 °C erwärmt. Der Farbstoff der Formel

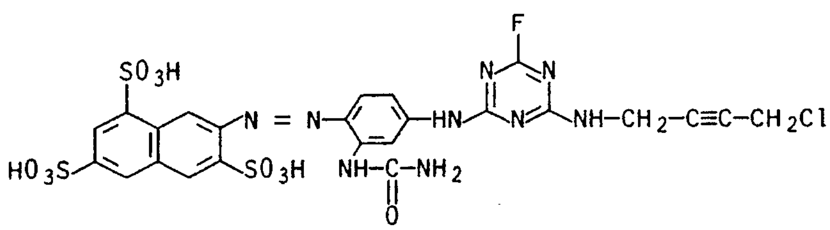

wurde isoliert, was durch Aussalzen, Eindampfen oder Gefriertrocknen der Reaktionslösung möglich ist. Er färbt Baumwolle in goldgelbem Ton.

Weitere erfindungsgemäße Farbstoffe erhält man, wenn man die in Tabelle 2 aufgeführten Azofarbstoffe gemäß Beispiel 16 oder 17 umsetzt.

Tabelle 2

| Beispiel Nr. | Azofarbstoff | Farbton auf Baumwolle |
|---|---|---|
| 18 | 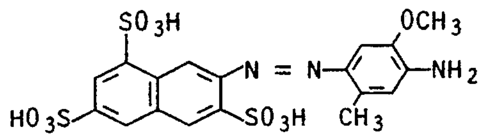 | goldgelb |
| 19 | 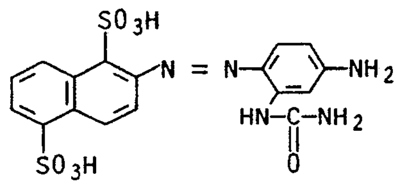 | goldgelb |
| 20 | 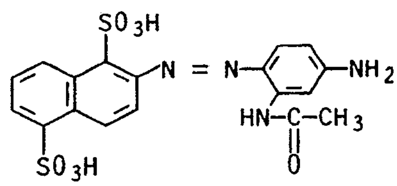 | goldgelb |
| 21 | 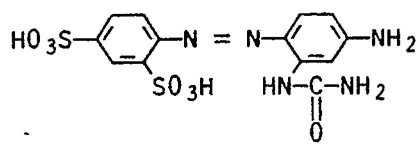 | goldgelb |
| 22 | 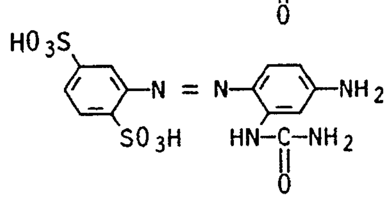 | goldgelb |
| 23 | 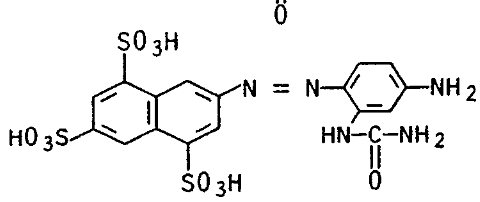 | goldgelb |

Beispiel 24

Eine Diazoniumsalzsuspension, die aus 33,6 g (0,1 mol) des Kondensationsproduktes von 1,3-Phenylendiamin-4-sulfonsäure und 2, 4,6-Trichlor-1,3,5-triazin hergestellt wurde, wurde bei Raumtemperatur zu einer Lösung von 50,3 g (0,1 mol) der Kupplungskomponente der Formel

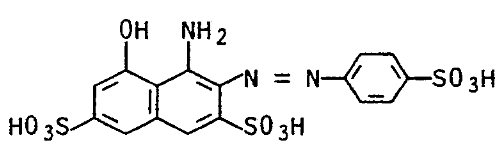

in 500 ml Wasser gegeben. Das Reaktionsgemisch wurde bis zur Beendigung der Kupplungsreaktion mit 2n Natriumcarbonatlösung bei einem pH-Wert von 6 bis 6,5 gehalten. Anschließend wurden 14 9 (0,1 mol) 1-Amino-4-chlorbut-2-in-hydrochlorid, gelöst in 100 ml Wasser, zugegeben, das Reaktionsgemisch auf 30 bis 40 °C erwärmt und der pH-Wert bis zur vollständigen Kondensation bei 8 bis 9 gehalten. Der Farbstoff der Formel

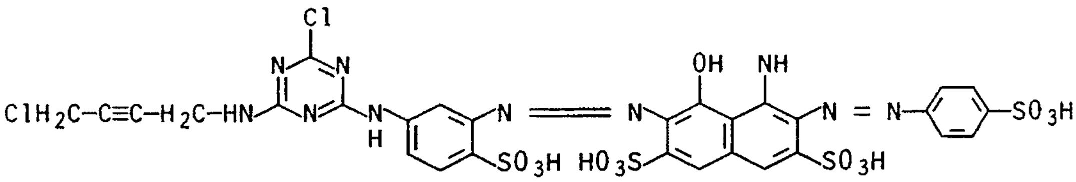

($\lambda_{max}$ = 599 nm)

wurde isoliert, was durch Aussalzen, Eindampfen oder Gefriertrocknen der Reaktionslösung möglich ist. Er färbt Baumwolle in blauem Ton.

In analoger Weise werden die in der folgenden Tabelle 3 aufgeführten Farbstoffe der Formel

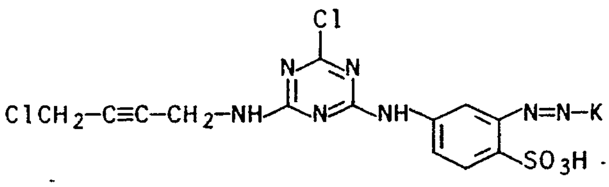

erhalten.

Tabelle 3

| Bsp. Nr. | K | $\lambda_{max}$ [nm] | Farbton auf Baumwolle |
|---|---|---|---|
| 25 | 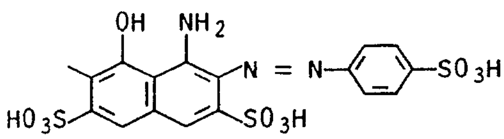 | 595 | marineblau |
| 26 | 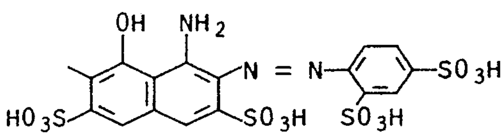 | 616 | marineblau |
| 27 | 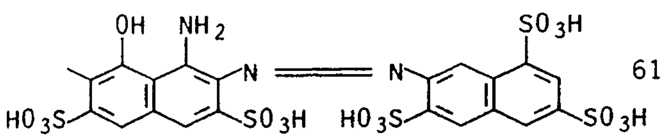 | 613 | marineblau |
| 28 | 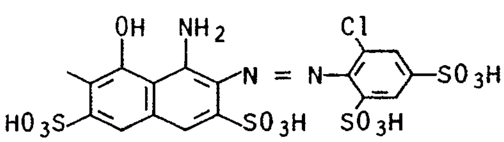 | 592 | marineblau |

Beispiel 29

19, 1 g der Verbindung der Formel

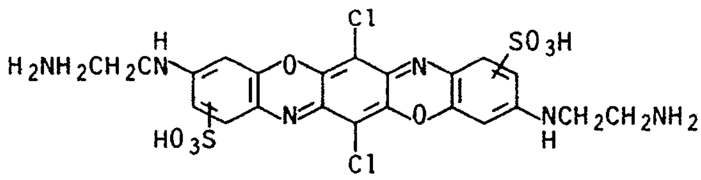

wurden in 1000 g Wasser eingerührt, wobei mit Natronlauge ein pH-Wert von 10 eingestellt wurde. Diese Lösung wurde in eine 40 bis 50 °C warme, auf pH 6 bis 8 gestellte Lösung des Kondensationsproduktes aus 16,6 g 2,4,6-Trichlor-1,3,5-triazin mit 12,6 g 1-Amino-4-chlorbut-2-in-hydrochlorid getropft. Unter Aufrechterhaltung von pH 6,5 bis 7 wurde bei 40 bis 50 °C gerührt bis die Umsetzung beendet war, was etwa 1 Stunde in Anspruch nahm. Nach dem Abkühlen auf Raumtemperatur wurde mit 50 g Kochsalz ausgesalzen, der ausgefallene Farbstoff abgesaugt und getrocknet. Er färbt Baumwolle in brillantem blauen Ton mit guten Echtheiten und entspricht der Formel

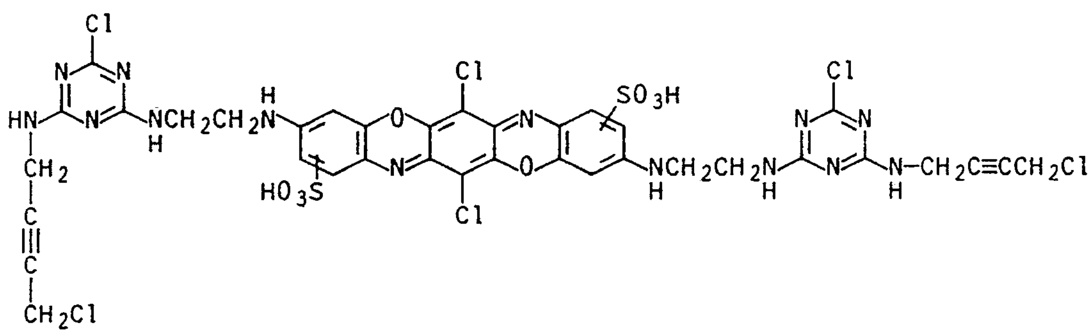

In analoger Weise werden die in der folgenden Tabelle 4 aufgeführten Farbstoffe der Formel

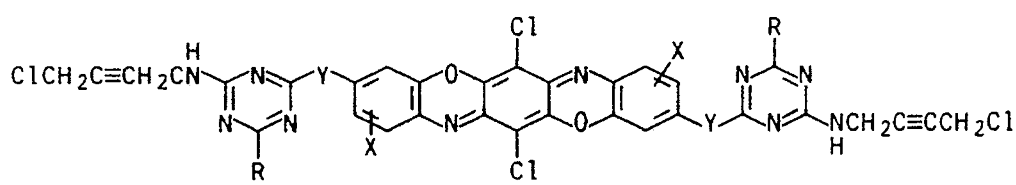

erhalten.

Tabelle 4

| Bsp. Nr. | Y | X | R | Farbton auf Baumwolle |
|---|---|---|---|---|
| 30 | $HN-CH_2CH-CH_3$<br>\|<br>NH | $SO_3H$ | Cl | blau |
| 31 | $HN-C_2H_4-NH$ | $SO_3H$ | F | blau |
| 32 | $HN-C_3H_6-NH$ | $SO_3H$ | Cl | blau |
| 33 | 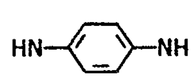 | $SO_3H$ | Cl | blau |
| 34 | $HN-C_2H_4-NH$ | $SO_2C_2H_4OSO_3H$ | Cl | blau |
| 35 | $O-C_2H_4-NH$ | $SO_3H$ | Cl | rot |
| 36 | 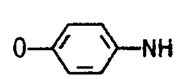 | $SO_3H$ | Cl | rot |

Beispiel 37

102 g (0,025 mol) 1-Amino-4-(4-hydroxysulfonyl-3-aminophenylamino)anthrachinon-2-sulfonsäure (Metaminblau) wurden in 250 ml Wasser mit 2n Natronlauge bei pH 6,5 gelöst. In diese Lösung wurde bei 0 bis 5 °C eine Suspension aus 4,61 g (0,025 mol) Cyanurchlorid in 100 g Eiswasser eingetragen. Unter Aufrechterhaltung von pH 6,5 wurde bei 0 bis 5 °C bis zur vollständigen Umsetzung gerührt (ca. 2 Std.).

Nach der Zugabe von 3,5 g (0,025 mol) 1-Amino-4-chlor-2-but-2-in-hydrochlorid wurde die Temperatur auf 35 °C erhöht und weitere 2 Stunden bei dieser Temperatur gerührt.

Nach dem Abkühlen auf Raumtemperatur wurde mit 100 g Kochsalz ausgesalzen, der ausgefallene Farbstoff abgesaugt und getrocknet.

Er färbt Baumwolle in blauem Ton mit guten Echtheiten und entspricht der Formel

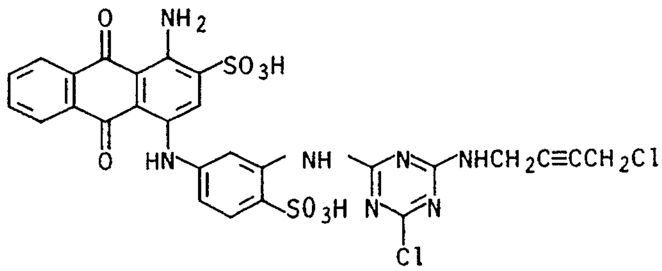

Beispiel 38

Ein Farbstoff mit ähnlichen Eigenschaften wurde erhalten, als man in Beispiel 37 anstelle von Metaminblau 13,2 g 1-Amino-4-(2,4,6-trimethyl-5-hydroxysulfonylphenylamino)anthrachinon-2-sulfonsäure verwendete. Er entspricht der Formel

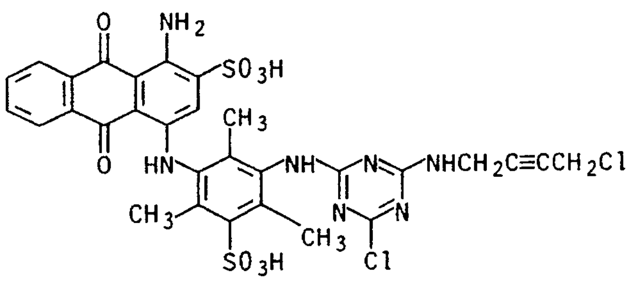

und färbt Baumwolle in blauem Ton.

Beispiel 39

Zu 81 g des Natriumsalzes der Verbindung der Formel

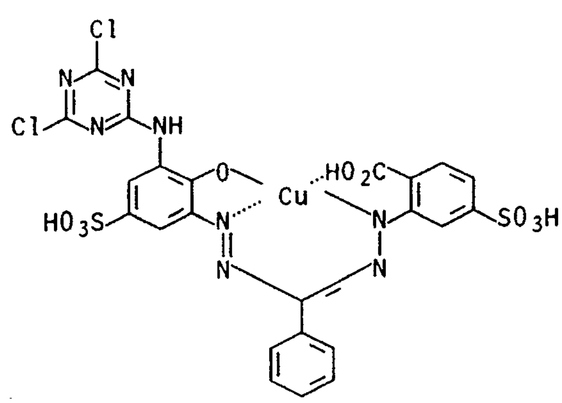

in 500 ml Wasser wurden 14 g 1-Amino-4-chlorbut-2-in-hydrochlorid gegeben und 3 Stunden bei 30 °C nachgerührt. Der pH-Wert wurde durch Zugabe von Natriumhydrogencarbonat bei 6,0 bis 6,5 gehalten. Anschließend wurde der gebildete Farbstoff der Formel

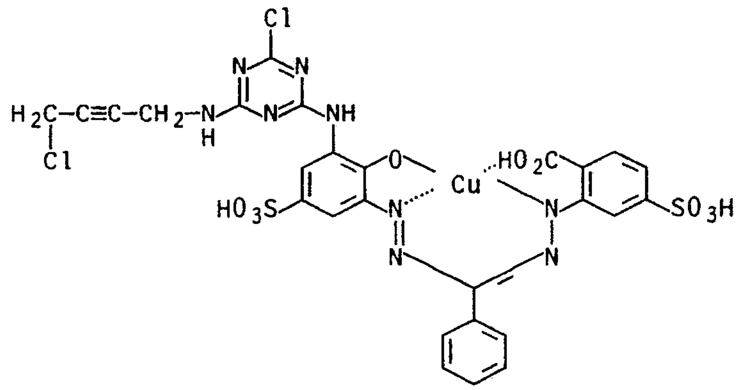

mit Natriumchlorid in Form seines Natriumsalzes ausgesalzen, abfiltriert und getrocknet. Das erhaltene Farbstoffpulver ist sehr gut wasserlöslich und färbt Baumwolle in klarem blauen Ton. Die Färbungen sind licht- und naßecht. Sie weisen eine bemerkenswerte Stabilität gegenüber oxidativen Einflüssen auf.

Analog Beispiel 39 erhält man die in Tabelle 5 aufgeführten Farbstoffe der Formel

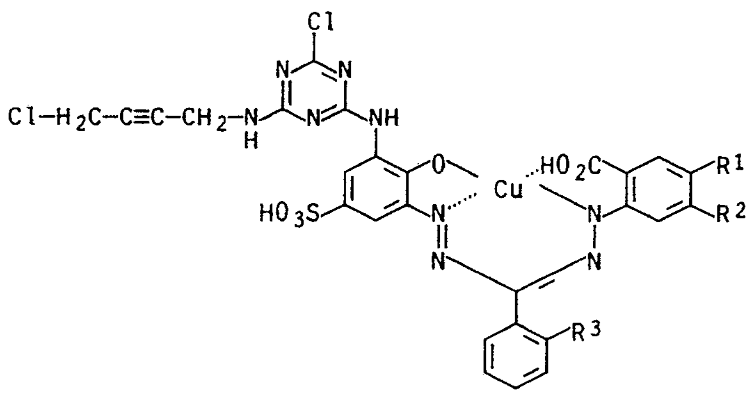

Tabelle 5

| Bsp. | $R^1$ | $R^2$ | $R^3$ |
|---|---|---|---|
| 40 | H | $SO_3H$ | $SO_3H$ |
| 41 | $SO_3H$ | H | H |
| 42 | $SO_3H$ | H | $SO_3H$ |

Beispiel 43

620 g einer wäßrigen Paste, die 89 g der Verbindung

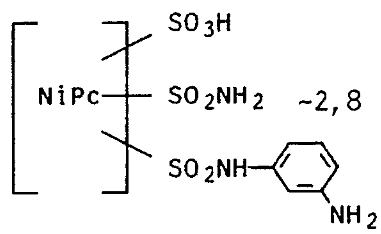

enthielt, wurden in 1400 ml Wasser bei pH 6,5 gelöst. Dazu gab man eine Suspension, die man durch Umsetzung von 16,6 g Cyanurchlorid bei 0 bis 5 °C und pH 6,0 bis 6,5 mit 13,5 g 1-Amino-4-chlorbut-2-in erhalten hatte. Das Reaktionsgemisch wurde auf 30 bis 35 °C erwärmt und der pH-Wert durch Zutropfen von 10 gew.-%iger Natronlauge bei 6,0 bis 6,5 gehalten. Nach 4 Stunden gab man 10 g Kieselgur zu und filtrierte. Das Filtrat wurde sprühgetrocknet. Man isolierte 90 g des Farbstoffs der Formel

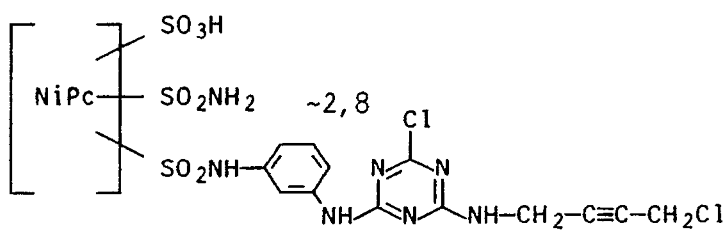

der Baumwolle in grünstichigem Türkiston färbt.

**Ansprüche**

**1.** Reaktivfarbstoffe der Formel I

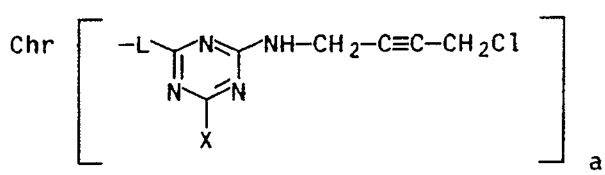

(I),

in der

a 1 oder 2,

X Fluor, Chlor, Brom, $C_1$-$C_4$-Alkylsulfonyl, Phenylsulfonyl oder einen Rest der Formel

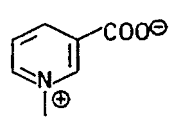

,

L Imino, $C_1$-$C_4$-Alkylimino oder Phenylimino und

Chr den Rest eines Chromophors, der gegebenenfalls eine weitere reaktive Gruppe aufweist und der sich von einem gegebenenfalls metallisierten Mono- oder Disazofarbstoff, einem Triphendioxazin, einem Anthrachinon, einem Kupfer-Formazan oder einem metallisierten Phthalocyanin ableitet, bedeuten.

**2.** Reaktivfarbstoffe nach Anspruch 1, die der Formel Ia

$$Chr(-L^1-E^1)_a \qquad (Ia)$$

entsprechen, in der

$L^1$ Imino und
$E^1$ einen Rest der Formel IIa

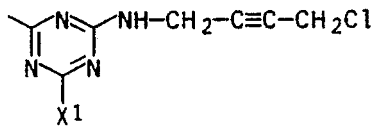

(IIa),

worin $X^1$ für Fluor oder Chlor steht, bedeuten und Chr und a jeweils die in Anspruch 1 genannte Bedeutung besitzen.

3. Verwendung der Reaktivfarbstoffe gemäß Anspruch 1 zum Färben oder Bedrucken von Hydroxygruppen oder Stickstoff enthaltenden Substraten.

Europäisches Patentamt

# EUROPÄISCHER RECHERCHENBERICHT

Nummer der Anmeldung

EP 90 12 3288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A- 118 060 (BASF AG)<br>* Anspruch; Seite 6, Zeilen 14-20 * & BE-A-596 061 (Kat. D)<br>--- | 1-3 | C 09 B 62/04<br>C 09 B 62/78 |
| X | GB-A- 924 230 (BASF AG)<br>* Ansprüche 1-3,5-14; Seite 1, Zeilen 25-28; Seite 3, Zeilen 32-77 * & DE-A-1130 097, DE-A-1 208 020 (Kat. D)<br>--- | 1-3 | |
| A | FR-A-1 282 278 (BASF AG)<br>* Zusammenfassung; Seite 2, linke Spalte, Absatz 3 *<br>--- | 1-3 | |
| A | GB-A- 950 140 (BASF AG)<br>* Ansprüche *<br>----- | | |

RECHERCHIERTE SACHGEBIETE (Int. Cl.5)

C 09 B

Der vorliegende Recherchenbericht wurde für alle Patentansprüche erstellt

| Recherchenort | Abschlußdatum der Recherche | Prüfer |
|---|---|---|
| DEN HAAG | 26-02-1991 | GINOUX C.R.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)